# EUROPEAN PATENT APPLICATION

(11) **EP 0 580 536 A2**
(43) Date of publication of application: **26.01.1994**
(21) Application number: 93480077.2
(22) Date of filing: 15.06.1993
(51) Int. Cl.: G06F 15/20

(54) **Method and apparatus for automatically building bibliographies in a multi-media environment**

(30) Priority: 22.07.1992 US 918865
(71) Applicant: International Business Machines Corporation, Armonk, N.Y. 10504 (US)
(72) Inventor: Eisen, Ivan, Flower Mound, TX 75028 (US); Murphrey, Stephen W., Highland Village, TX 75067 (US)
(74) Representative: de Pena, Alain

(57) **Abstract**

An automatic bibliography builder is provided for use in a computer system. While browsing through a reference (text, audio, video, etc.), an author may select the reference for use in a bibliography. The present invention automatically obtains the necessary data, i.e., title, paragraph, page, etc., and places the properly formatted data into a bibliography file. Upon completion of the research, the author will then have a correctly formatted and complete bibliography for direct use in an authored document or as a record of the research.

## Description

This invention relates in general to computer software, and in particular to a method and apparatus for automatically building a bibliography in a multi-media computer environment.

The creation of a bibliography for use in a published document is a well-known and often undesirable chore to authors of all sorts. While conducting research, an author is currently required to manually keep track of reference materials. Typically, this requires a hand written or typed list of references which includes the title, author, published date, page, paragraph, and etc. for each reference. Such manual listing can often result in the loss of the list which then requires the author to relocate the references. Additionally, manual listing frequently results in incorrect or insufficient bibliographic information. The author would then again be required to return to the references to write down the additional or correct information.

With the advent of on-line libraries and multi-media computer systems, increasing amounts of research can be done on-line. Thus, all the needed information for a bibliographic entry is available to the writer on-line. However, there is currently no known method for automatically extracting the needed information for a bibliographic entry or for placing such information into a bibliography list. Thus, there is a need for a method and apparatus which automatically creates a bibliography.

The present invention provides a method and apparatus for automatically preparing a bibliography which substantially reduces or eliminates the manual procedures of the prior art. The present invention allows the computer to extract the appropriate bibliographic information and to automatically create the bibliographic entry for a bibliography.

In accordance with one aspect of the present invention a method of preparing a bibliography on a computer system is provided. A reference is first selected for entry into the bibliography. Reference data is automatically formatted into a bibliographic entry and then the entry is automatically transferred to a bibliography list.

If a specific page, paragraph, etc. of the reference is to be indicated in the bibliography, the author may simply mark the passage using any appropriate method such as a mouse, keyboard, a light pen, etc. The appropriate information will then be properly indicated in the bibliography. In addition, a viewer will be able to see a bibliographic reference while reviewing an authored document.

The present invention provides a technical advantage of automatically creating a bibliography without the need for manual extraction of bibliographic data. It is a further technical advantage that a viewer will be able to link to and view a bibliographic reference during review of an authored document by clicking on the bibliographic entry.

For a more complete understanding of the present invention and advantages thereof, reference is now made to the Detailed Description taken in conjunction with the attached Drawings, in which:
Figure 1 is a schematic illustration of a data processing system in accordance with the present invention;
Figure 2 is a graphical illustration of one embodiment of the present invention;
Figure 3 is a graphical illustration of a bibliography formed in accordance with the present invention;
Figure 4 is a flow diagram for initiation of the present invention;
Figure 5 is a flow diagram representing implementation of the present invention;
Figure 6 is a flow diagram representing the actions of the present invention in a reference; and
Figure 7 is a flow diagram representing the actions of the present invention in a reference when an on-line viewer of the finished document starts in a media editor/browser.

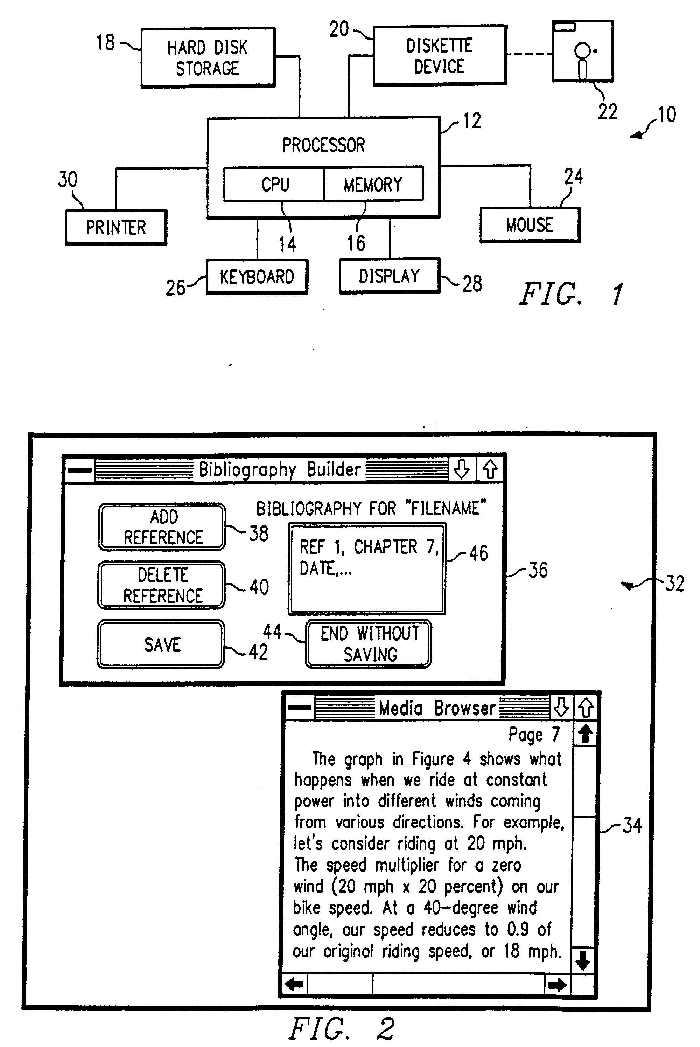

Referring to Figure 1, there is shown, in block diagram form, a data processing system 10 according to the present invention. The system 10 includes a processor 12, which includes a central processor unit (CPU) 14 and a memory 16. Additional storage, in the form of a hard disk storage 18 and a diskette device 20, is connected to the processor 12. The diskette device 20 receives a diskette 22 which has computer program code recorded thereon that implements the present invention in the system 10. The system 10 also includes user interface hardware, including a mouse 24 and a keyboard 26 for allowing user input to the processor 12 and a display 28 for presenting visual data to the user. The system 10 may also include a printer 30. Although not shown, it is to be understood that the system 10 may be provided with an interconnection to external sources through such as, for example, a local area network, a wide area network, or a modem.

Referring to Figure 2, a screen 32 such as may be found on the display 28 (see Fig. 1) is shown. As an author does research using the system 10, a browser window 34 will be used to review references on-line. Although not shown, it is to be understood that additional windows could be utilized on the system 10 and that the reference material may comprise text, audio, video and/or any combination thereof, i.e., multi-media.

During research, a second window 36 is opened in accordance with the present invention. The second window 36 provides the commands to build a bibliographic entry. For example, the following commands may be provided: "Add Reference," "Delete Reference," "Save," and "End Without Saving." Within the window 36, there will also be a representation of the bibliographic data corresponding to the reference being reviewed in window 34.

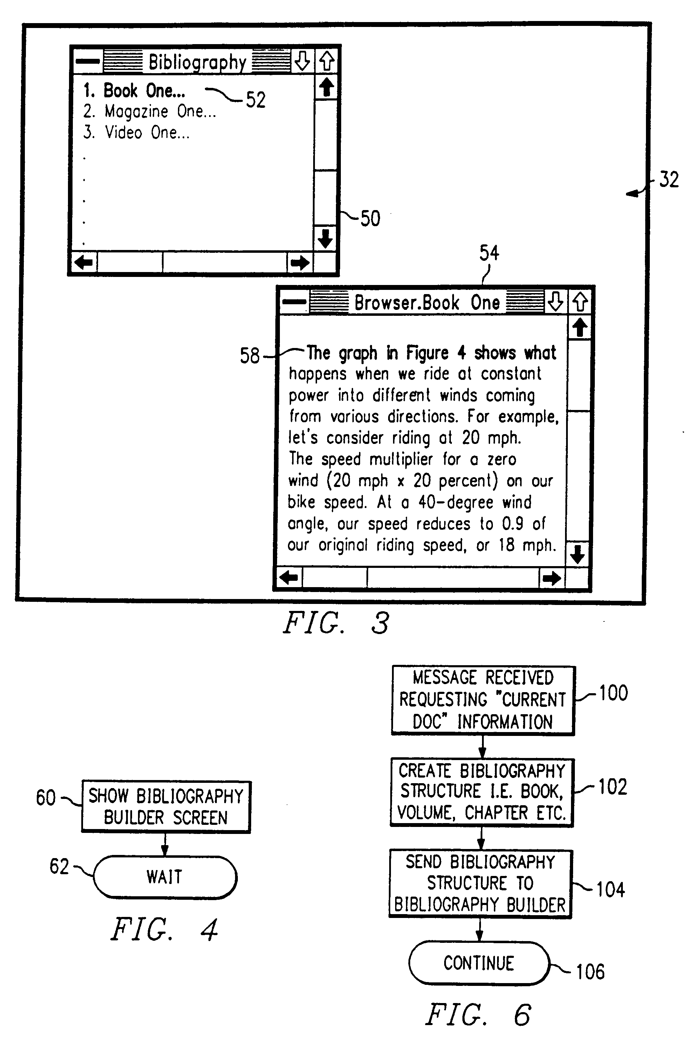

Referring to Figure 3, after completing research and selecting "Add Reference" command 38 from window 36, a bibliography 50 will be produced. The bibliography 50 will contain a listing, in the proper format, of all references selected by the author. References may include books, magazines, audio tapes, videos, and etc. The present invention also allows the author to select from the bibliography 50 one of the bibliographic entries by any appropriate method such as, for example, a bibliographic entry identified by the reference numeral 52 in Figure 3. By selecting the bibliographic entry 52, the reference corresponding thereto will appear in an additional window 54. Then by using a multi-media footnote control such as disclosed US application serial number 918,502 filed by I. Eisen and S. Murphrey entitled, Dynamically Created Footnote Control Using a Multi-Media Development System, US application serial number 918,479 filed by I. Eisen and S. Murphrey entitled, Method and Apparatus for Multi-Media Footnote Control Created Through User Input, and US application serial number 918,866 filed by I. Eisen, S. Murphrey, F. Fandrick and S. Parikh entitled, Method and Apparatus for Creating a Multi-Media Footnote Control in Video Data.

If a particular page, paragraph, etc. is to be specifically indicated in a bibliographic entry, the author merely marks the selected portions of the reference by highlighting, as indicated by reference numeral 58, with any appropriate method. For example, the author may highlight the selected portions with a mouse, a light pen, a keyboard, a touchscreen or a voice activated device.

Referring to Figure 4, a flowchart illustrating the initialization of the bibliography builder in accordance with the present invention is shown. In block 60, the bibliography builder screen is shown. At 62, further instructions are then awaited.

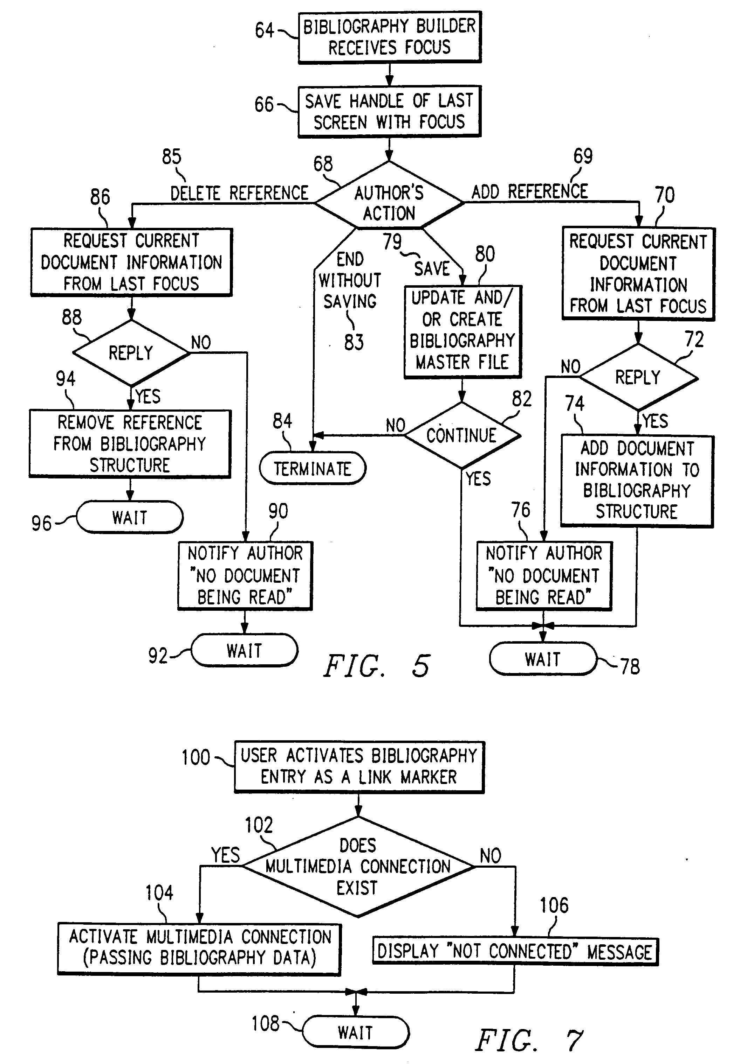

Referring to Figure 5, a flowchart illustrating the flow of the present invention for building a bibliography is illustrated. At block 64, the bibliography builder receives focus (i.e., identifies the last document or reference being viewed in the browser). At block 66, the present invention saves the handle of the last screen with focus. At decision block 68, the present invention awaits selection of an appropriate command from the author. If the author selects the command "Add Reference" 69, current document information is requested from the last focus at block 70. At decision block 72, it is then determined whether or not a reply is received. If the response to decision block 72 is yes, document information is added to the bibliography structure at block 74. If the response to decision block 72 is no, the author is notified that no document is being read at block 76. Subsequent to block 74 and block 76, the present invention waits for further information at 78.

If the author selects "Save" 79, the bibliography master file is updated at block 80. At decision block 82 it is then determined whether or not to continue. If the response to decision block 82 is yes, the present invention waits for further author input at 78. If the response to decision block 82 is no, the present invention terminates at 84.

If the author selects "End Without Saving" 83 at decision block 68, the present invention proceeds to terminate at 84.

If the author selects "Delete Reference" 85 at decision block 68, the current document information is requested from the last focus at block 86. At block 88, it is determined whether or not a reply is received. If the response to decision block 88 is no, the author is notified that no document is being read at block 90. The present invention then waits for further input at 92. If the response to decision block 88 is yes, the reference is removed from the bibliographic structure at block 94. The present invention then waits for further author input at 96.

Referring to Figure 6, the flow of the present invention within a browser window is illustrated. At block 100, a message is received requesting the current document information. At block 102, the bibliographic structure is created (i.e., book name, volume, chapter, and etc.). At block 104 the bibliographic structure is sent to the bibliography builder. The present invention then continues at 106.

Referring to Figure 7, the flow of the present invention is illustrated when a user is in a previously authored document and wants to view a bibliographic reference. At block 100, the user activates a bibliographic entry as a link marker. It is then determined at decision block 102 whether or not a multimedia connection exists. If the response to block 102 is yes, the multimedia connection is activated (passing the bibliography data) at block 104. If the response to decision block 102 is no, a "not connected" message is displayed to the user at block 106. The present invention then waits at 108.

The present invention simplifies the manual intensive chore of creating bibliographies. By taking advantage of data that is already known by the computer system being used, bibliographic entries can be automatically created and formatted. The entries can then be transferred to a separate file for creation of a bibliography which may then be placed into an authored document or merely retained for further research. As a result of the present invention, an author/researcher will need no longer find themselves having to redo research as a result of lost/incorrect/incomplete bibliographic information.

## Claims

1. A method of creating a bibliography on a computer system, comprising the steps of:
selecting a reference being viewed on the system for entry into a bibliography file on the system;
automatically formatting said reference into a bibliographic entry; and
automatically transferring said entry to said bibliography file.

2. The method of Claim 1, further comprising the step of:
marking selected portions of said reference in said file.

3. The method of Claim 2, wherein said step of marking comprises:
highlighting said portions.

4. The method of Claim 3, wherein said step of highlighting comprises:
dragging a mouse over said portions.

5. The method of Claim 3, wherein said step of highlighting comprises:
marking with selected keystrokes of a keyboard.

6. The method of Claim 3, wherein said step of highlighting comprises:
designating with a light pen.

7. The method of Claim 3, wherein said step of highlighting comprises:
touching said portions on a touchscreen.

8. The method of Claim 3, wherein said step of highlighting comprises:
orally instructing a voice activated device.

9. The method of Claim 1, wherein said step of automatically formatting comprises:
automatically collecting appropriate information from said reference.

10. The method of Claim 1, further comprising the steps of:
selecting one of said created bibliographic entries; and
automatically presenting said reference corresponding thereto.

11. A computer system for creating a bibliography, comprising:
means for selecting a reference being viewed on the system for entry into a bibliography file on the system;
means for automatically formatting said reference into a bibliographic entry; and
means for automatically transferring said entry to said bibliography file.

12. The system of Claim 11, further comprising:
means for marking selected portions of said reference for identification in said file.

13. The system of Claim 11, wherein said means for marking comprises:
means for highlighting said portions.

14. The system of Claim 12, wherein said means for highlighting comprises:
a mouse.

15. The system of Claim 12, wherein said means for highlighting comprises:
a keyboard.

16. The system of Claim 12, wherein said means for highlighting comprises:
a light pen.

17. The system of Claim 12, wherein said means for highlighting comprises:
a touchscreen.

18. The system of Claim 12, wherein said means for highlighting comprises:
a voice activated device.

19. The method of Claim 11, wherein said means for auto matically formatting comprises:
means for automatically collecting appropriate information from said reference.
